# EUROPÄISCHE PATENTSCHRIFT

(11) **EP 0 869 363 B1**
(45) Veröffentlichungstag und Bekanntmachung des Hinweises auf die Patenterteilung: **31.07.2002**
(21) Anmeldenummer: 98106094.0
(22) Anmeldetag: 03.04.1998
(51) Int. Cl.: G01N 35/08, G01N 1/38

(54) **Anordnung zur Freisetzung von Reagenzien**
Device for dispensing reagents
Dispositif de distribution de réactifs

(30) Priorität: 04.04.1997 DE 19715322
(43) Veröffentlichungstag der Anmeldung: 07.10.1998
(73) Patentinhaber: GKSS-FORSCHUNGSZENTRUM GEESTHACHT GMBH, 21502 Geesthacht (DE)
(72) Erfinder: Albus, Heinz-Erwin, Dr., 21382 Brietlingen (DE); Neidhart, Bernd, Prof. Dr., 21502 Geesthacht (DE)
(74) Vertreter: Niedmers, Ole, Dipl.-Phys.

(56) Entgegenhaltungen:
- EP-A- 0 168 550
- EP-A- 0 560 504
- DE-A- 2 427 843
- GB-A- 2 171 926
- US-A- 4 448 691

## Beschreibung

Die Erfindung betrifft eine Anordnung zur Freisetzung von Reagenzien, insbesondere zur Herstellung von Kalibrierlösungen, umfassend eine Membran, an deren einer ersten Membranseite ein Akzeptormedium von einem Einlaß zu einem Auslaß vorbeiführbar ist und deren andere zweite Membranseite mit einem Reagenz- oder Donatormedium beaufschlagbar ist, wobei das Reagenz- oder Donatormedium in einem zu der zweiten Membranseite hin offenen Behälter aufnehmbar ist.

Eine Anordnung dieser Art ist bekannt (GB-A-2 171 926). Mittels der bekannten Vorrichtung kann ein Nachweismittel einem Strom eines flüssigen Trägers einer Chromatographiesäule zugeführt werden, um die Nachweisempfindlichkeit zu verbessern und gleichzeitig auch einem Strom eines flüssigen Trägers auf dem Gebiet der Fließeintragsanalyse (Flow Injection Analysis). Bei dem flüssigen Träger handelt es sich um ein flüssiges Effuent, daß im Zusammenhang mit einer Chromatographiersäule benutzt wird, bzw. aus der Chromatographiersäule stammt.

Aus der EP-A-0 168 550 ist eine Vorrichtung zur Probenvorbereitung chemischer Lösungen bekannt, bei der ebenfalls das zuzusetzende Reagenz in den Probenstrom eingeführt wird, und zwar durch eine sogenannte Faserspitze. Die Faserspitze wird anstelle einer Pumpe verwendet und gestattet eine leichte Auswechselbarkeit, wobei die Faserspitze mit einem Behälter verbunden ist, in dem sich das Reagenz befindet.

Trotz der immer weiter voranschreitenden Automatisierung von Analyseverfahren für die verschiedensten Zwecke werden auch heute noch in den meisten Fällen die für die Durchführung von naßchemischen Analysen benötigten Reagenz- und Kalibrierlösungen manuell hergestellt. Diese Vorgehensweise bringt jedoch Nachteile mit sich. Insbesondere zur Herstellung von Kalibrierlösungen mit geringen Konzentrationen sind, ausgehend von einer haltbaren, relativ konzentrierten Stammlösung, meist mehrere Verdünnungsschritte notwendig, was zum einen eine Vervielfachung des Verdünnungsfehlers nach sich zieht und zum anderen unverhältnismäßig große Abfallmengen zur Folge hat. Zudem erfordert die manuelle Herstellung von Kalibrierlösungen den Einsatz von erfahrenem Laborpersonal. Darüber hinaus können die Lösungen oft nicht unmittelbar vor ihrem Gebrauch angesetzt werden, so daß diese über einen gewissen Zeitraum hinweg gelagert werden müssen. Dieses erhöht die Analysenkosten. Zudem kann sich die Analytkonzentration in den Lösungen während der Zeitspanne zwischen Herstellung und Vermessung zum Beispiel durch Einwirkung von Licht oder Sauerstoff verändern, was sich negativ auf die Meßsicherheit der Analyseergebnisse auswirkt. Diese Problematik ist um so gravierender, je größer die chemische Instabilität der jeweiligen Lösungen ist. Dies gilt auch für Gemische, die Komponenten enthalten, die nur bedingt bzw. kurzfristig miteinander verträglich sind, wie zum Beispiel bestimmte Multielementkalibrierlösungen.

Für ein chemisch-analytisches Labor ist zudem die Anwendung der herkömmlichen, manuellen Technik zur Herstellung von Kalibrierlösungen mit einem nicht unwesentlichen bürokratischen Aufwand verbunden, da die Vorschrift zur Herstellung der Kalibrierlösungen und zur Durchführung einer Kalibrierlösung Bestandteil der entsprechenden Standardvorschrift (SOP) sein muß.

Es sind viele Versuche unternommen worden, Systeme bzw. Anordnungen zur Herstellung von Kalibrierlösungen vorzuschlagen und zu realisieren, mittels denen ein automatisiertes bzw. automatisierbares Herstellen von Kalibrierlösungen möglich ist, das objektiv feststellbare Leistungskenndaten aufweist. Solche Kalibriersysteme werden beispielsweise in der Fachwelt kontinuierlich arbeitende Reagenz-Freisetzungs-Systeme, kurz RFS, genannt. Diese werden im Durchfluß betrieben, d.h. aus einem Reagenzreservoir, auch Donor- bzw. Donatorphase genannt, wird ständig die freizusetzende Substanz bzw. der Analyt in einem mit dem Reservoir im Stoffaustausch stehenden Akzeptorstrom abgegeben, wobei es dabei das Ziel ist, eine homogene Lösung mit konstanter Konzentration zu erzeugen.

Diese im Stand der Technik ganz allgemein bekannten Reagenz-Freisetzungs-Systeme werden grob unterteilt in Freisetzungssysteme mit physikalischer und chemischer Kontrolle, wobei bei den Systemen mit chemischer Kontrolle die Freisetzung unter Ausnutzung einer chemischen Reaktion erfolgt, in deren Verlauf die freizusetzende Substanz kontinuierlich als Reaktionsprodukt neu gebildet wird. So ist beispielsweise ein System bekannt, mit dem Kupfer-Kalibrier-Lösungen auf elektrochemischem Wege hergestellt werden.

Bei den im Stand der Technik bekannten Systemen mit physikalischer Kontrolle wird der Stoffübergang zwischen Donor- und Akzeptorphase mit Hilfe physikalischer Transportmechanismen wie z.B. der Diffusion oder der Desorption erreicht. Dabei ist die Triebkraft für den Stofftransport bei passiven Systemen ausschließlich der Konzentrationsgradient zwischen Donor- und Akzeptorphase, während bei aktiven Systemen der Stofftransport durch externe Eingriffe beeinflußt wird. Letzteres ist beispielsweise durch Änderung der Druckverhältnisse oder auch durch Anlegung eines elektrischen Potentials möglich.

Die diffusionskontrollierten Freisetzungssysteme lassen sich in membran- und auflösungskontrollierte Systeme unterteilen. Bei den membrankontrollierten Systemen werden Donor- und Akzeptorphase durch eine Membran voneinander getrennt, und der die Freigabe bestimmende Transportschritt ist die Diffusion des Analyten durch die Membran. Grundsätzlich kann bezüglich der Kritik des bisherigen Standes der Technik, der vorangehend in allgemeiner Form abgehandelt worden ist, gesagt werden, daß allen bisherigen automatisierten Systemen gemeinsam ist, daß die Anforderungen an die Konstanz und die Reproduzierbarkeit der jeweiligen Reagenz-Konzentrationen im Akzeptorstrom relativ gering ist.

Eine im Stand der Technik bekannte Anordnung der eingangs genannten Art bildet in jüngster Zeit eine immer häufiger genutzte Möglichkeit, membrankontrollierte Systeme in analytisch-chemische Verfahren zu integrieren, nämlich solche, die im Stand der Technik mit Dialyse- oder Diffusionszellen bezeichnet werden. Diese Zellen ermöglichen die Abtrennung des zu vermessenden Analyten von einer störenden Matrix. Dabei wird der Effekt ausgenutzt, daß eine entsprechende Flachmembran zwar für den Analyten durchlässig ist, nicht jedoch für störende Matrixbestandteile. Insbesondere in der klinischen Chemie, wo kleine anorganische Ionen von großen Biomolekülen wie Proteinsäuren und Nukleinsäuren vor der Analyse getrennt werden müssen, haben sich derartige Systeme bewährt. In der sogenannten "Flow Injection Analysis" (FIA) werden Dialysezellen zur on-line Probenvorbereitung eingesetzt. Dabei fließen Donor- und Akzeptorstrom in einem Modul auf zwei Kanäle, die mit Hilfe einer Flachmembran voneinander getrennt sind. Eine in den Donorstrom injizierte Probe gelangt mit diesem in die Dialysezelle. Dort diffundiert ein Teil der Analyten durch die Membran in den Akzeptorstrom und wird aus der Zelle abtransportiert. Anschließend wird der Analyt durch Vermischen des Akzeptorstromes mit weiteren Flüssigkeitsströmen mit den gewünschten Reagenzien umgesetzt und kann daraufhin bestimmt werden.

Ein Beispiel für die Anwendung einer Doppelkanal-Dialysezellen im Rahmen eines Flow Injection Analysis-Systems stellt die Bestimmung von Ammonium-Ionen mittels Gasseparation dar. Hier wird die Probe in einen alkalischen Trägerstrom injiziert. Dabei entsteht aus den Ammonium-Ionen Ammoniak, der in der Dialysezelle durch Diffusion durch eine gasdurchlässige Membran aus Polytetrafluorethylen (PTFE) in den Akzeptorstrom gelangt. Dieser Akzeptorstrom wird nach dem Austritt aus der Zelle mit einer Reagenz-Lösung (nach Nessler) vermischt, und der sich bildende Farbkomplex mit Hilfe eines Durchflußphotometers vermessen.

Wie groß der Anteil an Analyt ist, der in den Akzeptorstrom gelangt, hängt von den jeweiligen Flußraten des Donor- und Akzeptorstrom, der Permeabilität der Membran und der Diffusionsstrecke und damit der Länge der Kanäle ab. Da während der relativ kurzen Zeit, in der der Analyt mit der Membran in Kontakt kommt und die nach System und den gewählten Systemparametern zwischen wenigen Sekunden und einigen Minuten liegt, in der Regel kein vollständiger Übergang des Analyten aus der Donorin die Akzeptorphase stattfindet, ist eine solche on-line Dialyse meist mit einem Verdünnungseffekt verbunden. Bei den in der Literatur beschriebenen Zellen liegt der Verdünnungsfaktor in den meisten Fällen zwischen 1 : 100 und 1 : 10, d.h. im Akzeptorstrom befindet sich nach der Dialyse 1 - 10 % der ursprünglich in die Zelle gelangten Menge an Analyt. Dieser Effekt ist jedoch unerwünscht, da sich hierdurch die Nachweisbzw. Bestimmungsgrenze eines Analysenverfahrens deutlich verschlechtert. Lediglich bei einigen Analyseverfahren, die zur Bestimmung von Lösungen mit hohen Analytgehalten (10 mg/l - 200 mg/l entwickelt wurden und bei denen eine Vorverdünnung der Probe notwendig ist, wurden Dialysezellen zu diesem Zweck in den apparativen Aufbau integriert.

Die bekannten membrankontrollierten Systeme unter Einschluß des voraufgeführten detaillierter beschriebenen Systems erfüllen im wesentlichen nicht die eingangs formulierten Anforderungen, die an ein Kalibriersystem zu stellen sind, was seinen Grund zum einen darin hat, daß sie entweder von vornherein für andere Zwecke konzipiert wurden und/oder zum anderen Mängel bezüglich des apparativen Aufbaus aufweisen. Insbesondere der Einsatz der vorangehend eingehend beschriebenen Doppelkanal-Dialysezelle als Kalibriersystem zeigt in Versuchen, daß sowohl die Wiederholpräzision als auch die Präzision von Serie zu Serie der Konzentrationen der freigesetzten Kalibrierlösungen nicht den Anforderungen genügen, die an ein Reagenzfreisetzungssystem zu stellen sind, das als Kalibriersystem eingesetzt werden soll. Ein Grund für die nicht ausreichende Eignung liegt auch in der geringen Robustheit der Apparatur gegenüber Schwankungen der Flußrate und der Pulsation der Flüssigkeitsströme.

Es ist somit Aufgabe der vorliegenden Erfindung, eine Anordnung der eingangs genannten Art zu schaffen, mit der ein Reagenz-Freisetzungs-System geschaffen wird, das in automatisierbare Anlagen und in Qualitätssicherungskonzepte allgemein integrierbar ist und objektiv beurteilbare Leistungskenndaten ermöglicht, die eine Freisetzungskinetik quasi 0. Ordnung und damit einen konstanten und reproduzierbaren Stofftransport durch die jeweilige Membran aufweist, um eine hohe Genauigkeit und hohe Meßsicherheit der gewünschten Reagenz-Konzentrationen in der hergestellten Kalibrierlösungen zu gewährleisten, die einfach aufgebaut und kostengünstig herstellbar ist und einen robusten Einsatz auch unter Nicht-Laborbedingugen ermöglicht.

Die Aufgabe wird erfindungsgemäß dadurch gelöst, daß zwischen der ersten Membranseite und dem daran vorbeiführbaren Akzeptormedium ein Abdeckelement nach Art einer Blende zur Beeinflussung des durch die Membran in das Akzeptormedium hineintretenden Volumenstromes des Reagenz- oder Donatormediums angeordnet ist.

Mit der erfindungsgemäß vorgeschlagenen Lösung werden die eingangs genannten Nachteile der manuellen Herstellung von Kalibrierlösungen, die zu einer Verschlechterung der Meßsicherheit von Analyseergebnissen führen, vermieden, da erfindungsgemäß die Kalibrierung eines verwendeten Meßgerätes unter Verwendung der mit der erfindungsgemäßen Anordnung hergestellten Kalibrierlösung auf sehr elegante Weise möglich ist, denn die erfindungsgemäße Anordnung kann faktisch in einen Aufbau mit dem zu kalibrierenden Meßsystem integriert werden. Die mit der erfindungsgemäßen Anordnung hergestellten Kalibrierlösungen können unmittelbar vor ihrer Vermessung in der Menge und der Konzentration hergestellt werden, in der sie benötigt werden. Eine Lagerung von Lösungen wird vermieden, und es treten keine Verdünnungsfehler und kein überflüssiger Abfall auf. Zudem können menschliche Fehler ausgeschlossen werden und es kann als vorteilhafter Nebeneffekt über die freigesetzte Arbeitszeit von Laborpersonal oder anderen Personen, die die erfindungsgemäße Anordnung einsetzen, anderweitig verfügt werden.

Ein weiterer wesentlicher Vorteil ist der, daß auch in bezug auf eine angestrebte international einheitliche Anerkennung von Analyseverfahren sich der Einsatz der hier vorgestellten Anordnung sehr gut eignet, zumal in diesem Fall die Kalibrierung eines Meßsystems nach IS0 9000 zertifiziert werden kann, so daß die Anleitung zur Durchführung einer Kalibrierung beispielsweise nicht mehr Bestandteil einer Standardverfahrensvorschrift (SOP) sein muß. Zudem lassen sich automatisierte Kalibriersysteme unter Einschluß der erfindungsgemäßen Anordnung aufgrund ihrer objektiv feststellbaren Leistungskenndaten sehr gut in Qualitätssicherungskonzepte einbinden.

Die Öffnung in der Blende bzw. dem Abdeckelement stellt die aktive Fläche der am Stofftransport durch die Membran hindurch beteiligten Membranfläche dar. So kann beispielsweise durch Austausch des Abdeckelements bzw. der Blende mit unterschiedlichen Löchern der Stofftransport durch die Membran beispielsweise in Abhängigkeit des Reagenz- bzw. Donatormediums und/oder in Abhängigkeit des Membranwerkstoffs selbst eine bestimmungsgemäße Beeinflussung vorgenommen werden.

Der Behälter, in dem das Reagenz- oder Donatormedium auf der einen Seite der Membranseite aufgenommen wird, kann an sich eine beliebige geeignete konstruktive Form aufweisen. Es hat sich jedoch als vorteilhaft herausgestellt, den Behälter im Normalenquerschnitt auf die zweite Membranseite hin kegelförmige auszubilden, d.h. daß die kleine Basisseite des Kegels zur zweiten Membranseite hin gerichtet ist, wohingegen die parallele größere Basisseite des Kegels die Öffnung zur Befüllung mit Reagenz- oder Donatormedium bildet.

Bei einer noch anderen vorteilhaften Ausführungsform der Anordnung ist das Loch für den Durchtritt des Reagenzoder Donatormediums in seinem Lochquerschnitt und/oder seiner Lochform einstellbar, so daß das gleiche Ziel, was vorangehend im Zusammenhang mit dem Austausch des Abdeckelements bzw. der Blende erreicht wird, auf sehr einfache Weise unter Vermeidung des Austauschs der Blende durchgeführt werden kann, d.h. daß auch ein zeitraubendes Demontieren der Anordnung, ein Austausch des Abdeckelements und gegebenenfalls eine Neuabdichtung und wiederum eine Montage entfallen. Auch kann mit dieser vorteilhaften Ausgestaltung der Anordnung ein unerwünschter Verlust des Reagenz- oder Donatormediums (Analyt) aus dem Behälter vermieden werden.

Bei der erfindungsgemäßen Anordnung kann prinzipiell gemäß der eingangs aufgeführten Unterteilung derartiger Systeme, die einen physikalisch kontrollierten Stoffübergang umfassen, bei dem hier beschriebenen Stoffübergang mittels Diffusion durch Membranen der Stofftransport ausschließlich durch den Konzentrationsgradienten zwischen Donor- und Akzeptorphase bewirkt werden, d.h. vom Reagenz- oder Donatormedium durch die Membran hindurch in das Akzeptormedium hinein. Es ist aber vorteilhafterweise auch möglich, den Stofftransport durch externe Eingriffe zu beeinflussen, wobei vorzugsweise dabei als treibende oder ergänzend treibende Kraft für den Durchtritt des Reagenz- oder Donatormediums durch die Membran in das Akzeptormedium hinein die Gravitationskraft herangezogen wird.

Es ist aber auch vorteilhafterweise möglich, als treibende Kraft für den Durchtritt des Reagenz- oder Donatormediums durch die Membran in das Akzeptormedium hinein eine Pumpe oder einen Verdichter zu verwenden, mit dem eine gezielte Änderung der Druckverhältnisse möglich ist, wobei es auch möglich ist, beispielsweise eine gezielte Beeinflussung mittels des Anlegens eines elektrischen Potentials vorzunehmen.

Die Erfindung wird nun unter Bezugnahme auf die nachfolgenden schematischen Zeichnungen anhand eines Ausführungsbeispieles eingehend beschrieben. Darin zeigen:
- Fig. 1: ein Schema, das die grundsätzliche Funktionsweise eines Reagenz-Freisetzungs-Systems RFS zeigt,
- Fig. 2: einen Aufbau einer Anordnung zur Freisetzung von Reagenzien, wie sie im Stand der Technik bekannt ist und wie sie Ausgangspunkt für die Schaffung der erfindungsgemäßen Lösung war, wobei diese bekannte Anordnung in Form einer sogenannten Doppelkanal-Dialysezelle ausgebildet ist,
- Fig. 3: eine erfindungsgemäß ausgebildete Anordnung zur Freisetzung von Reagenzien und
- Fig. 4: eine Darstellung der Streuung der Meßwerte um einen Mittelwert der Freisetzung eines Reagenz in Abhängigkeit von der Zeit mit einer erfindungsgemäßen Anordnung für Nitrat.

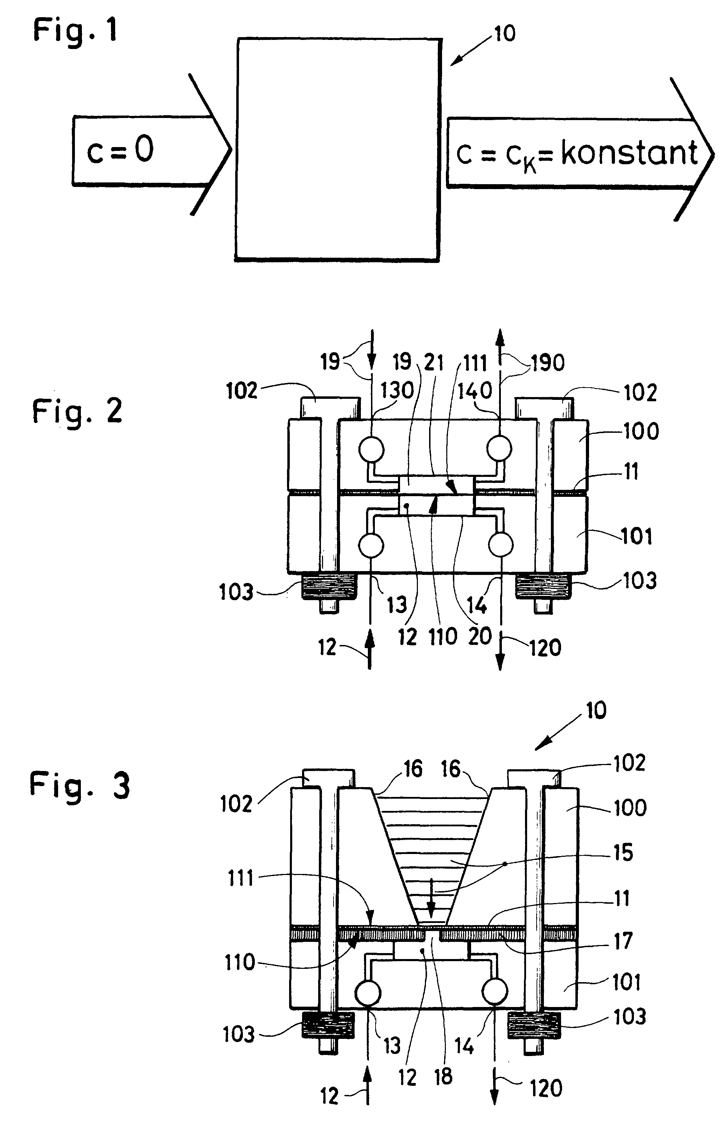

Zum besseren Verständnis der erfindungsgemäßen Anordnung 10 wird zunächst kurz das in Fig. 1 dargestellte Schema zur Erläuterung der grundsätzlichen Funktionsweise eines Reagenzfreisetzungssystems herangezogen. Eine derartige Anordnung 10 wird im Durchfluß betrieben, d.h. aus einem Reagenz-Reservoir, auch Donorphase genannt, wird ständig die freizusetzende Substanz bzw. der Analyt an einen mit dem Reservoir in Stoffaustausch stehenden Akzeptorstrom abgegeben. Ziel dabei ist es, eine homogene Lösung mit konstanter Konzentration zu erzeugen. Gibt das Reagenzreservoir pro Zeiteinheit gleiche Massen m der freizusetzenden Substanz ab, ergibt sich eine Freisetzungskinematik quasi 0. Ordnung. Das Freisetzungsverhalten des Reagenzfreisetzungssystems ist dabei konstant sowie zeitunabhängig und für den Konzentrationsverlauf im Akzeptorstrom gilt dc/dt ≅ 0. Dies führt zu einer konstanten Konzentration cₖ im Akzeptorstrom

Die in Fig. 2 dargestellte Anordnung war, wie schon erwähnt, der bis dahin bestehende Stand der Technik, der der in Fig. 3 dargestellten Erfindung zugrunde lag. Fig. 2 stellt den schematischen Aufbau einer Doppelkanal-Dialysezelle dar, wobei dieser Aufbau vorab erläutert wird. Ein blockförmiges Oberteil 100 und ein blockförmiges Unterteil 101 bilden die Anordnung. Unter Zwischenlage einer Membran 11 werden beide Blöcke durch Schrauben-Mutter-Verbindungen 102, 103 dichtend miteinander verschraubt. Sowohl im Oberteil 100 als auch im Unterteil 101 ist jeweils ein durchgehender Kanal 20, 21 ausgebildet, die jeweils in den Bereichen, an denen sie jeweils an der ersten Membranseite 110 bzw. der zweiten Membranseite 111 angrenzen, hohlraumförmig vergrößert ausgebildet sind. Beide Kanäle 20, 21 weisen jeweils einen Einlaß 13 bzw. 130 und eine Auslaß 14 bzw. 140 auf. Durch den Einlaß 13 über den Kanal 20 zum Auslaß 14 wird ein Akzeptormedium 12 geleitet. Durch den Einlaß 130 über den Kanal 21 zum Auslaß 140 wird ein Donatorstrom 19 geleitet. Eine in den Donatorstrom 19 injizierte Probe gelangt somit in den Bereich des Kanales 21, dessen eine Wand von der zweiten Membranseite 111 gebildet wird. Ein Teil des Analyten bzw. der Probe, die im Donatorstrom 19 enthalten ist, diffundiert durch die Membran 11 und kommt auf der ersten Membranseite 110 in Kontakt mit dem dort fließenden Akzeptormedium 12 und wird aus der Anordnung über den Auslaß 14 abtransportiert. Anschließend wird der Analyt durch Vermischen des Akzeptormediums 12 mit weiteren Flüssigkeitsströmen mit den gewünschten Reagenzien umgesetzt und kann daraufhin bestimmt werden.

Die erfindungsgemäße Anordnung 10 gemäß Fig. 3 unterscheidet sich von der Anordnung gemäß Fig. 2 dadurch, daß im Oberteil 100 lediglich ein im Querschnitt konisch bzw. trapezförmig ausgebildeter Behälter 16 ausgebildet ist, in dem das Reagenz- oder Donatormedium 15 aufgenommen wird. Zwischen der ersten Membranseite 110 und dem daran vorbeiführbaren Akzeptormedium 12 ist ein Abdeckelement 17 nach Art einer Blende angeordnet. Die Blende bzw. das Abdeckelement 17 weist ein Loch auf, das die aktiv am Stofftransport beteiligte Membranfläche bestimmt. Das Abdeckelement 17 ist grundsätzlich austauschbar gegen ein Abdeckelement mit anderer Lochform und anderem Lochquerschnitt. Es ist aber auch möglich, das Abdeckelement 17 derart auszubilden, daß ohne Demontage der Lochquerschnitt und/oder die Lochform von außen einstellbar sind. Der übrige Aufbau der Anordnung 10 gemäß Fig. 3 entspricht im wesentlichen dem Aufbau der Anordnung gemäß Fig. 2, wobei für gleiche Elemente der Anordnung 10 gleiche Bezugszeichen gelten.

Im folgenden werden Angaben über den Verlauf der Freisetzungsversuche mit der Anordnung 10 anhand verschiedener Beispiele aufgeführt.

Im Verlauf der Freisetzungsversuche mit der Anordnung 10 wurden verschiedene Ober- und Unterteile sowie Schablonen mit unterschiedlichen Lochdurchmessern eingesetzt. Die verwendeten Bauteile, ihre Bezeichnungen und ihre Maße sind in den Tabellen 1 bis 3 aufgeführt.

**Tabelle 1:**

| bei den Messungen mit der Anordnung 10 verwendete Oberteile | | | | |
|---|---|---|---|---|
| Bez. | Maße (Höhe∗ Breite∗Länge) | Kegelvol. | Durchmesser der unteren Kegelöffnung | Durchmesser der oberen Kegelöffn. |
| VK 1 | 5∗3∗4,5 cm | 4 ml | 1,5 mm | 2,5 cm |
| VK 2 | 5∗3∗4,5 cm | 4 ml | 1,0 mm | 2,5 cm |
| (VK = Versuchskegel) | | | | |

**Tabelle 2:**

| bei den Messungen mit der Anordnung 10 verwendete Unterteile | | |
|---|---|---|
| Bez. | Kanalmaße (Höhe∗Breite∗Länge) | Kanalvolumen |
| UD 1 | 0,1∗2∗10 mm | 0,002 ml |
| UD 2 | 1∗2∗10 mm | 0,02 ml |
| (UD = Unterteil Dialysezelle) | | |

**Tabelle 3:**

| bei den Messungen mit der Anordnung 10 verwendete Schablonen | | | | |
|---|---|---|---|---|
| Bez. | Dicke der Schablone | Lochdurchmesser | aktive Membranfläche | Volumen der Bohrung |
| S 1 | 1,0 mm | 1,2 mm | 1,13 mm² | 1,13 µl |
| S 2 | 1,0 mm | 0,8 mm | 0,50 mm² | 0,50 µl |
| S 3 | 1,0 mm | 0,5 mm | 0,20 mm² | 0,20 µl |
| (S = Schablone) | | | | |

In Tabelle 4 sind die Zusammensetzungen der verwendeten Bestandteile der Anordnung 10 im einzelnen aufgeführt.

**Tabelle 4:**

| Zusammensetzung der verwendeten Anordnungen | |
|---|---|
| Bezeichnung | Anordnung der Bauelemente |
| Aufbau 1 | VK 1 // Cellophan-Membran // S 2 // UD 2 |
| Aufbau 2 | VK 1 // Cellophan-Membran // S 3 // UD 2 |
| Aufbau 3 | VK 1 // Cellophan-Membran // S 1 // UD 2 |
| Aufbau 4 | VK 1 // Cellophan-Membran // S 2 // UD 1 |
| Aufbau 5 | VK 2 // Cellophan-Membran // S 2 // UD 2 |
| Aufbau 6 | VK 1 // Kernspurfilter // S 2 // UD 2 |
| Aufbau 7 | VK 1 // Kernspurfilter // S 1 // UD 2 |

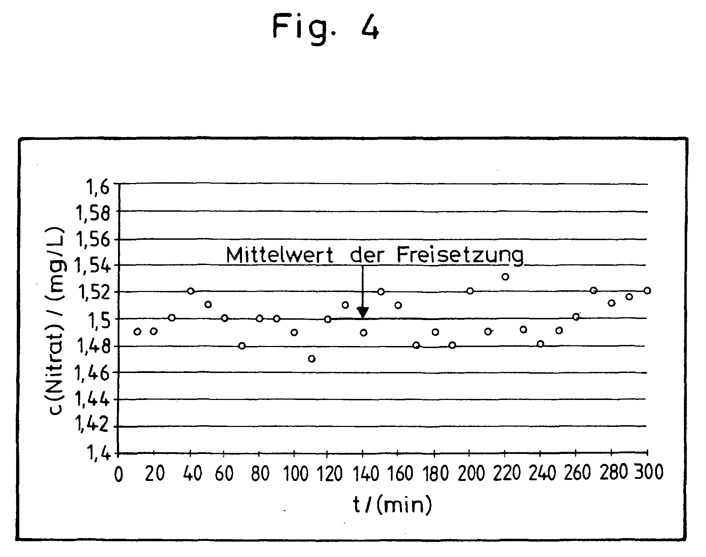

Zu Beginn der Freisetzungsversuche mit der Anordnung 10 wurden Untersuchungen zu ihrem Freigabeverhalten durchgeführt. Hierzu wurde Aufbau 1 verwendet, vergleiche Tabelle 4. Die Flußrate für den Akzeptorstrom betrug 2,00 ml/min und die Reservoirkonzentration 10 g/l für N respektive 44,3 g/l für Nitrat. Vom zweiten Tag der Versuchsreihe an stellte sich eine reproduzierbare Nitratkonzentration von durchschnittlich 150 mg/l im Akzeptorstrom ein. Dieses entspricht einer Verdünnungsrate von 1 : 29.530. Fig. 4 zeigt die Streuung der Meßwerte um den Mittelwert der Freisetzung bei einer Tagesmessung für einen Zeitraum von 5 h. Für die dargestellten Meßwerte ergibt sich ein Konzentrationsmittelwert von 1,50 mg/l für Nitrat mit einer relativen Standardabweichung von 0,9 %. Nach Beendigung des Langzeitversuchs wurden bei drei verschiedenen Flußraten (0,50, 2,00 und 5,00 ml/min) fünf Messungen, bestehend aus jeweils zwei Meßdaten, im Abstand von je einem Tag durchgeführt, um den Mittelwert und die Gesamtstandardabweichung der Freisetzung sowie den durchschnittlichen Massenfluß J zu bestimmen. Die Reservoirkonzentration betrug bei allen Versuchen 10 g/l für N respektive 44,3 g/l für Nitrat. Dabei zeigte sich, daß die Mittelwerte und die relativen Standardabweichungen der Messungen, die bei derselben Flußrate durchgeführt worden waren, kaum voneinander abwichen. Die relativen Gesamtstandardabweichungen wurden unter Berücksichtigung aller bei einer Flußrate erhaltenen Meßwerte berechnet. Die Ergebnisse der Freisetzungsversuche mit der Anordnung 1 gemäß Aufbau 1 sind im einzelnen in Tabelle 5 zusammengestellt.

**Tabelle 5:**

| Kennzahlen der Freisetzungsversuche mit Anordnung 10/Aufbau 1 Reservoirkonz.: 10 g/l für N resp. 44,3 g/l für Nitrat | | | |
|---|---|---|---|
| Flußrate | 0,50 ml/min | 2,00 ml/min | 5,00 ml/min |
| Konz. im | 5,94 f. Nitrat | 1,49 f. Nit. | 0,59 f. Nit. |
| Akzeptorstrom | resp. | resp. | resp. |
| (Ges.mittelwert) [mg/l] | 1,34 für N | 0,34 für N | 0,13 für N |
| rel. Gesamtstandardabweichung (n = 50) | 1,2 % | 0,8 % | 1,0 % |
| Verdünn.rate | 1:7.460 | 1:29.730 | 1:75.080 |
| mittl. Freigabegeschwindigkeit des Systems (Nit.) | 2,97 µg/min | 2,98 µg/min | 2,95 µg/min |
| mittl. Massenfluß J (Nitrat) [µg/(min∗mm²)] | 5,92 | 5,94 | 5,90 |

Bei der Untersuchung des Freisetzungsverhaltens der Anordnung 10 in Abhängigkeit von den Systemparametern ergab sich ein linearer und reproduzierbarer Zusammenhang sowohl zwischen der Analyt-Konzentration im Akzeptorstrom und dem reziproken Wert der Flußrate als auch zwischen der Analyt-Konzentration im Akzeptorstrom und der Reservoirkonzentration. Dies ermöglichte eine einfache und effektive Streuung des Freigabeverhaltens der entwickelten erfindungsgemäßen Anordnung 10 und damit eine genaue Regelung der Analytkonzentration in den gewünschten Kalibrierlösungen.

Nach Beendigung der in der Tabelle 5 aufgeführten Meßreihen wurde mit Hilfe der für diese Messungen benutzten Anordnung 10 gemäß Aufbau 1 untersucht, welche Meßgenauigkeit in einem kontinuierlichen UV-spektralphotometrischen Analyseverfahren zur Bestimmung von Nitrat erzielt werden konnte, wenn die Kalibrierung des Durchflußphotometers mit Nitratlösungen erfolgte, die bei einer Reservoirkonzentration von 20 g/l für N freigesetzt wurden. Eine solche Kalibrierung wurde bei 215 nm unter Verwendung von zehn Kalibrierlösungen mit Nitratkonzentrationen von 1 bis 10 mg/l durchgeführt. Zur Bestimmung der jeweiligen Konzentrate in den verwendeten Kalibrierlösungen wurde der aus der zuvor gemessenen Flußrate errechnete reziproke Wert (1/F) in die entsprechende Geradengleichung eingesetzt. Jede der freigesetzten Lösungen wurde zwei Minuten lang durch das Photometer gefördert und der sich dabei für die Extinktion ergebene Mittelwert als Kalibrierwert herangezogen. Nach der Kalibrierung des Photometers mit den freigesetzten Lösungen wurden mit Nitratlösungen bekannten Gehalts, die durch Einwaage und Verdünnen der entsprechenden Stammlösungen täglich frisch hergestellt worden waren, Doppelbestimmungen durchgeführt. Diese Vorgehensweise wurde gewählt, weil es in der Routineanalytik sehr oft vorkommt, daß die Analytkonzentration in einer Probe mit Hilfe einer Doppelbestimmung ermittelt wird. Danach wurde das Gerät mit manuell hergestellten Lösungen kalibriert, um anschließend mit Proben, die aus den schon zuvor verwendeten Analysenlösungen entnommen worden, ebenfalls Doppelbestimmungen durchzuführen. Die dabei verwendeten Kalibrierlösungen wurden täglich frisch aus einer entsprechenden Stammlösung hergestellt. Die hierzu notwendigen Verdünnungsschritte wurden unter Verwendung handelsüblicher Vollpipetten und Meßkolben durchgeführt, wobei stets dieselbe Pipette und derselbe Meßkolben zur Durchführung eines bestimmten Verdünnungsschritts zum Einsatz kamen. Zur Vermeidung größerer Fehler bei den Volumenmessungen wurden nur Vollpipetten mit einem Volumen ≥ 10 ml und Meßkolben mit einem Volumen ≥ 50 ml eingesetzt. Der oben beschriebene Meßablauf wurde an mehreren Tagen ausgeführt. In Tabelle 6 sind die Ergebnisse der Doppelbestimmungen zweier Tagesmessungen nach Kalibrierung mit freigesetzten Lösungen und in Tabelle 7 (siehe unten) die Ergebnisse derselben Tagesmessungen nach Kalibrierung mit manuell hergestellten Lösungen aufgeführt. Das für den jeweiligen Mittelwert einer Doppelbestimmung angegebene Vertrauensintervall wurde unter Berücksichtigung einer Wahrscheinlichkeit von P = 0,95 berechnet.

**Tabelle 6:**

| Ergebnisse für die Nitrat-Bestimmung mit A 1 nach Kalibrierung mit Lösungen, die mit Hilfe der Anordnung 10/Aufbau 1 freigesetzt und deren Gehalt aufgrund der Flußrate des Akzeptorstroms berechnet wurde | | |
|---|---|---|
| | Tagesmessung 1 | Tagesmessung 2 |
| Sollwerte der Nitratlsg. | Mittelwert der Bestimmung | Mittelwert der Bestimmung |
| 1,00 mg/l | 1,02 ± 0,03 mg/l | 0,95 ± 0,03 mg/l |
| 2,00 mg/l | 2,03 ± 0,06 mg/l | 2,02 ± 0,05 mg/l |
| 4,00 mg/l | 3,95 ± 0,12 mg/l | 4,10 ± 0,14 mg/l |
| 8,00 mg/l | 8,09 ± 0,24 mg/l | 7,90 ± 0,23 mg/l |

**Tabelle 7:**

| Ergebnisse für die Nitrat-Bestimmung mit A 1 nach Kalibrierung mit manuell hergestellten Lösungen | | |
|---|---|---|
| | Tagesmessung 1 | Tagesmessung 2 |
| Sollwerte der Nitratlsg. | Mittelwert der Bestimmung | Mittelwert der Bestimmung |
| 1,00 mg/l | 1,01 ± 0,03 mg/l | 0,97 ± 0,02 mg/l |
| 2,00 mg/l | 1,97 ± 0,06 mg/l | 2,00 ± 0,05 mg/l |
| 4,00 mg/l | 3,98 ± 0,12 mg/l | 4,04 ± 0,12 mg/l |
| 8,00 mg/l | 8,05 ± 0,23 mg/l | 8,03 ± 0,23 mg/l |

### Bezugszeichenliste

- 10: Anordnung
- 100: Oberteil
- 101: Unterteil
- 102: Schraube
- 103: Mutter
- 11: Membran
- 110: erste Membranseite
- 111: zweite Membranseite
- 12: Akzeptormedium
- 120: Akzeptormedium
- 13: Einlaß
- 130: Einlaß
- 14: Auslaß
- 140: Auslaß
- 15: Reagenz- oder Donatormedium
- 16: Behälter
- 17: Abdeckelement
- 18: Loch (Abdeckelement)
- 19: Donatorstrom
- 20: Kanal
- 21: Kanal

## Patentansprüche

1. Anordnung (10) zur Freisetzung von Reagenzien, insbesondere zur Herstellung von Kalibrierlösungen, umfassend eine Membran (11), an deren einer ersten Membranseite (110) ein Akzeptormedium (12) von einem Einlaß (13) zu einem Auslaß (14) vorbeiführbar ist und deren andere zweite Membranseite (111) mit einem Reagenz- oder Donatormedium (15) beaufschlagbar ist, wobei das Reagenz- oder Donatormedium (15) in einem zu der zweiten Membranseite (111) hin offenen Behälter (16) aufnehmbar ist, **dadurch gekennzeichnet, daß** zwischen der ersten Membranseite (110) und dem daran vorbeiführbaren Akzeptormedium (12) ein Abdeckelement (17) nach Art einer Blende zur Beeinflussung des durch die Membran (11) in das Akzeptormedium (12) hineintretenden Volumenstromes des Reagenz- oder Donatormediums (15) angeordnet ist.

2. Anordnung nach Anspruch 1, **dadurch gekennzeichnet, daß** der Behälter (16) im Normalenquerschnitt auf die zweite Membranseite (111) hin kegelförmig ausgebildet ist.

3. Anordnung nach Anspruch 1 und/oder 2 **dadurch gekennzeichnet, daß** das Loch (18) für den Durchtritt des Reagenz- oder Donatormediums (15) in seinem Lochquerschnitt und/oder seiner Lochform einstellbar ist.

4. Anordnung nach einem oder mehreren der Ansprüche 1 bis 3, **dadurch gekennzeichnet, daß** die treibende Kraft für den Durchtritt des Reagenz- oder Donatormediums (15) durch die Membran (11) in das Akzeptormedium (12) hinein die Gravitationskraft ist.

5. Anordnung nach einem oder mehreren der Ansprüche 1 bis 4, **dadurch gekennzeichnet, daß** die treibende Kraft für den Durchtritt des Reagenz- oder Donatormediums (15) durch die Membran (11) in das Akzeptormedium (12) hinein mittels einer Pumpe oder eines Verdichters erzeugbar ist.

## Claims

1. Device (10) for dispensing reagents, in particular for preparing calibration solutions, comprising a membrane (11), alongside a first membrane side (110) of which an acceptor medium (12) can be fed from an inlet (13) to an outlet (14) and it being possible to apply a reagent or donor medium (15) to the other second membrane side (111), the reagent or donor medium (15) being containable in a container (16) open towards the second membrane side (111), **characterised in that** a cover element (17) in the form of a screen is provided between the first membrane side (110) and the acceptor medium (12) fed alongside it in order to act on the flow volume of the reagent or donor medium (15) flowing into the acceptor medium (12) through the membrane (11).

2. Device as claimed in claim 1, **characterised in that** the container (16) is conical in cross section perpendicular to the second membrane side (111).

3. Device as claimed in claim 1 and/or 2, **characterised in that** the aperture (18) through which the reagent or donor medium (15) passes has an adjustable aperture cross section and/or shape.

4. Device as claimed in one or more of claims 1 to 3, **characterised in that** the force driving the reagent or donor medium (15) through the membrane (11) into the acceptor medium (12) is gravity.

5. Device as claimed in one or more of claims 1 to 4, **characterised in that** the force driving the reagent or donor medium (15) through the membrane (1) into the acceptor medium (12) may be generated by means of a pump or a compressor.

## Revendications

1. Dispositif (10) pour la libération de réactifs, en particulier pour la préparation de solutions d'étalonnage, comprenant une membrane (11) sur une première face de membrane (110) de laquelle on peut faire passer un milieu accepteur (12) d'une entrée (13) à une sortie (14) et sur une deuxième face de membrane (111) de laquelle on peut alimenter un milieu réactif ou donneur (15), le milieu réactif ou donneur (15) pouvant être reçu dans un récipient (16) ouvert en direction de la deuxième face de membrane (111), **caractérisé en ce qu'**un élément de recouvrement (17) analogue à un obturateur est disposé entre la première face de membrane (110) et le milieu accepteur (12) que l'on peut faire passer sur celle-ci afin d'influer sur le courant volumique du milieu réactif ou donneur (15) qui pénètre dans le milieu accepteur (12) à travers la membrane (11).

2. Dispositif selon la revendication 1, **caractérisé en ce que** le récipient (16) vu en coupe verticale a une forme conique en direction de la deuxième face de membrane (111).

3. Dispositif selon la revendication 1 et/ou la revendication 2, **caractérisé en ce que** le trou (18) de passage du milieu réactif ou donneur (15) a une section transversale et/ou une forme de perçage ajustables.

4. Dispositif selon l'une ou plusieurs des revendications 1 à 3, **caractérisé en ce que** la force propulsive pour le passage du milieu réactif ou donneur (15) dans le milieu accepteur (12) à travers la membrane (11) est la force de la pesanteur.

5. Dispositif selon l'une ou plusieurs des revendications 1 à 4, **caractérisé en ce que** la force propulsive pour le passage du milieu réactif ou donneur (15) dans le milieu accepteur (12) à travers la membrane (11) peut être produite au moyen d'une pompe ou d'un compresseur.
